# EUROPEAN PATENT APPLICATION

(11) **EP 4 737 960 A1**
(43) Date of publication of application: **06.05.2026**
(21) Application number: 24209611.3
(22) Date of filing: 29.10.2024
(51) Int. Cl.: G02B 6/122, G02B 6/136, G02B 6/132, G02B 6/12

(54) **METHOD OF MANUFACTURING A PHOTONIC INTEGRATED CIRCUIT (PIC) COMPRISING A LITHIUM NIOBATE WAVEGUIDE**

(71) Applicant: CSEM Centre Suisse d'Electronique et de Microtechnique SA - Recherche et Développement, 2002 Neuchâtel (CH)
(72) Inventor: GHADIMI, Amir, 1022 Chavannes-près-Renens (CH); SATTARI, Hamed, 1030 Bussigny (CH); PRIETO GONZALEZ, Ivan, 2000 Neuchâtel (CH); CHOONG, Gregory, 2000 Neuchâtel (CH)
(74) Representative: e-Patent SA

(57) **Abstract**

Method of manufacturing a photonic integrated circuit with at least one lithium niobate waveguide comprising the following steps :
i) providing a lithium niobate-on-insulator (LNOI) stacking, said stacking comprising a silicon (Si) substrate, a first silicon dioxide (SiOz) layer, a lithium niobate (LiNbO₃) layer, and a cladding dielectric layer, wherein said lithium niobate layer comprises said lithium niobate waveguide,
ii) applying a first photoresist mask on said cladding dielectric layer and creating at least one opening in said first photoresist mask by a photolithography process,
iii) implementing a first etching step by Reactive-ion etching (RIE) through said at least one opening, thereby creating at least one cavity across all the thickness of said cladding dielectric layer, said lithium niobate layer and said first silicon dioxide layer,
iv) implementing a second etching step by Deep Reactive-ion etching (DRIE) through at least part of said at least one opening, whereby at least part of said at least one cavity is extended further through the silicon substrate along a predetermined depth of at least 100 micrometres.

## Description

### Technical domain

The present invention concerns a method of manufacturing a photonic integrated circuit (PIC) with at least one lithium niobate waveguide. More in details, the method of the present invention comprises steps enabling the fabrication of smooth and vertical flanks or deep trenches in such photonic integrated circuits.

### Related art

Lithium niobate has attracted much attention since the 1970s due to its capacity to modify the light by means of an electric control as well as for its great transparency across a broad spectral band. Electro-optical (EO) lithium niobate waveguides have evolved throughout the years, in a race towards ever smaller electro-optical components with ever-lower optical losses and power consumption. Among others, the challenge consists in strongly confining the light while preserving low losses.

The use of lithium niobate (LiNbO₃) as main photonic material in the field of photonic integrated circuits (PICs) enables miniaturization while possibly designing complex PICs with tens of components in millimetre-sized chips. Those photonic integrated circuits are based on the so-called lithium niobate-on-insulator (LNOI) technology. According to the usual architecture, a substrate made from silicon, is covered by an oxide layer, usually a silicon dioxide layer (SiO₂), on which extends a thin lithium niobate film (LiNbO₃) patterned to define the waveguides and electro-active components. The stacking may further comprise a cladding layer to protect the waveguides, as well as metallic elements to transmit the electric signals for active electro-optical PICs. This type of PICs are often called "thin-film lithium niobate photonic integrated circuits" (TFLN PICs)

Several challenges are encountered when implementing TFLN PICs.

Among those challenges, there is a need for providing smooth and vertically oriented walls. In this context "vertical" refers to a direction perpendicular to the planes defined by the layers of the LNOI stacking. It is particularly challenging to implement a process guaranteeing an adequate alignment between the vertical cut planes of the different dielectric layers of the stacking and the vertical cut plane of the silicon substrate. Smooth and vertical walls are necessary for allowing tight connections between different components (e.g. other PICs or optical fibres). The objective is to avoid gaps and angles at the interfaces, which result in major optical losses in the connections between components. Gaps and angles at the interfaces may further result in wobbly connections, sensitive to mechanical perturbations and producing unstable losses, which must also be avoided.

Besides the connecting interface application, the capability to define deep vertical narrow trenches in a TFLN PIC is an enabler of new functional features including optical mode confinement, electromagnetic isolation and/or thermal isolation of the waveguides as will be later explained in several examples.

Those requirements should be reached without too many additional steps and too much complexity during the manufacturing process.

### Short disclosure of the invention

An aim of the present invention is the provision of a method of manufacturing a photonic integrated circuit with at least one lithium niobate waveguide that overcomes the shortcomings and limitations of the state of the art.

According to the invention, this aim is attained by the object of the attached claims 1 to 9, and especially by a method of manufacturing a photonic integrated circuit with at least one lithium niobate waveguide comprising the following steps :
i) providing a lithium niobate-on-insulator (LNOI) stacking, said stacking comprising a silicon (Si) substrate, a first silicon dioxide (SiO₂) layer on said silicon substrate, a lithium niobate (LiNbO₃) layer on said first silicon dioxide layer, and a cladding dielectric layer on said lithium niobate layer, wherein said lithium niobate layer comprises said lithium niobate waveguide,
ii) applying a first photoresist mask on said cladding dielectric layer and creating at least one opening in said first photoresist mask by a photolithography process,
iii) implementing a first etching step by Reactive-ion etching (RIE) through said at least one opening, thereby creating at least one cavity across all the thickness of said cladding dielectric layer, said lithium niobate layer, and said first silicon dioxide layer,
iv) implementing a second etching step by Deep Reactive-ion etching (DRIE) through at least part of said at least one opening, whereby at least part of said at least one cavity is extended further through the silicon substrate down to a predetermined depth of at least 100 micrometres, forming thereby at least one deeper cavity.

With respect to what is known in the art, the invention provides the advantage that it is possible to manufacture in a simple way deep cavities passing through an important depth of the silicon substrate, and which provide smooth and clean vertical walls, across both, the substrate and the dielectric layers, possibly including a waveguide end surface at the cut plane. The formation of such deep cavities can be advantageous per se for the fabrication of optical mode confinement structures, electromagnetic isolation and thermal isolation of the waveguides as will be discussed later. Furthermore, with additional processing steps that will be described in the following paragraphs, such smooth cavities can define the contours of the PICs for separating them from the fabrication wafer.

The novelty of the method resides in the association of these successive etching steps: A first step of reactive-ion etching (RIE) to attack the -relatively thin-dielectric layers of the LNOI stacking, followed by an in-depth attack of the Si substrate by deep reactive-ion etching (DRIE); wherein the same mask used in the RIE step is, at least partially, reutilized in the DRIE step. This combination is surprisingly advantageous in terms of the resulting surface quality (smoothness and verticality of the walls) across all the layers of the LNOI stacking. The method is also advantageous in terms of the simplicity of the process, which typically requires no further step of polishing or other surface finishing for the interfaces.

The method disclosed here could in general be applied to produce only trenches, blind holes, and other cavities in the PIC structure which are closed at the bottom. In such case, the PIC singulation could be realized by laser or saw dicing or any other method known from the prior art.

On the other hand, the present method is particularly convenient for defining at least partially the contour of the PIC as well as any inner through hole by the provision of at least one cavity, which in further processing steps reaches the bottom of the substrate.

According to an advantageous embodiment, it is possible to adapt the method such that said at least one deeper cavity extends through a predetermined depth corresponding to at least one third, preferably at least half of the silicon substrate thickness.

Said predetermined depth can be regulated by controlling the DRIE process as known by the skilled person; for example, by controlling the duration, the number of etching and passivation cycles and the parameters of the plasma, among others. In principle, all the cavities provided in the stacking and subject to the same etching process will reach the same predetermined depth, except those presenting a too limited width as will be later discussed.

Although the method is not limited to any specific shape of the cavities, in many advantageous applications they will present the shape of deep grooves, or trenches.

According to an advantageous embodiment of the method, at least one deeper cavity may comprise a trench in the form of a closed loop which defines a contour of the photonic integrated circuit.

Advantageously, the provision of one such closed loop trench may serve as an initial step for the singulation of the chip by implementing and additional step comprising : grinding the bottom side of the silicon substrate which is opposite to the side where the first silicon dioxide layer, the lithium niobate layer and the cladding layer are provided, until the thickness of said silicon substrate is reduced to at least said predetermined depth, such as to open from the bottom side at least said trench in the form of a closed loop, thereby disconnecting said photonic integrated circuit from said lithium niobate-on-insulator (LNOI) stacking.

According to another embodiment, the method of the invention may further comprise the following steps to be executed after the first etching step iii) and before the second etching step iv):
iiia) applying a second photoresist mask on said first photoresist mask, whereby said second photoresist mask fills said at least one cavity, and
iiib) creating at least one new opening through said first and second photoresist masks, which is aligned with but smaller in width than said at least one opening.

The main advantage of proceeding in this manner is that, in the embodiments with a single photoresist mask, the lateral faces of the dielectric layers (i.e., the cladding dielectric layer, the lithium niobate layer, and the first silicon dioxide layer) remain exposed during the whole DRIE process, which may possibly degrade the quality of the vertical surface initially cut by RIE through these layers. This can be particularly critical when the DRIE process is adjusted for important penetration depths, for example greater than 200 µm, and/or when a facet of the lithium niobate waveguide is exposed through this cut for connection purposes.

The addition of a second layer of photoresist mask will cover such sensitive faces, and the provision of a coaxial, thinner opening will allow attacking the silicon substrate by DRIE, without accidentally degrading the upper, dielectric layers.

Advantageously, the new openings may be defined respecting a distance of 1 to 10 µm from the borders of the initial opening, and preferably in the range from 2 to 5 µm. This would be thus the thickness of the photoresist left on the lateral faces of the originally cut dielectric layers, which has been found to be enough for protecting said faces during the DRIE process.

As can be understood, the method comprising the application of a second photoresist mask, with smaller openings, will result in a misalignment between the plane of the vertical side of the silicon substrate and the plane of the vertical sides of the dielectric layers. While this misalignment can be advantageous for certain applications which will be discussed later, it can also be corrected and even inverted by implementing the following steps to be executed after the second etching step iv), and before a possible step of grinding:
v) removing the photoresist mask and
v_a) applying a third etching step, comprising an isotropic etching process.

As mentioned earlier, all cavities or trenches which are sufficiently large to enable the DRIE step reaching the predetermined depth will produce said deeper cavities of said predetermined depth. On the other hand, the method can advantageously comprise creating at least one cavity which is narrow enough to prevent the corresponding deeper cavity from reaching said predetermined depth during the execution of the DRIE step, thereby creating a deeper cavity of a second type, characterized by a depth which is lower than said predetermined depth and which is dependent on the cavity width.

Adjusting the width of some cavities to prevent their full development down to the predetermined depth is advantageous to implement certain features in the PICs that will be explained later, and which require the provision of cavities or trenches of different depths. Said features can be implemented by the latter embodiment of the method within a single DRIE processing step.

It is another aim of the present invention to provide PICs of higher quality and/or comprising novel features enabled by the implementation of the present methods. Several of these new enabled features are discussed in the following sections. According to the invention, this aim is attained by the object of the attached claims 10 to 17.

### Short description of the drawings

Exemplar embodiments of the invention are disclosed in the description and illustrated by the drawings in which:
- Figures 1A to 1J illustrate schematically the steps for manufacturing a photonic integrated circuit with at least one lithium niobate waveguide according to a first embodiment of the invention,
- Figure 2 illustrates schematically possible interconnection of PICs using geometric features of the PICs profiles as assembly guides,
- Figure 3 illustrates schematically the cross-section of trenches of a first and a second type, as a function of their depth,
- Figure 4 illustrates schematically the cross-section of a PIC according to one embodiment,
- Figure 5 shows a scanning electron microscope (SEM) image of a portion of a TFLN PIC with trenches obtained according to the method of the present invention, and
- Figures 6A to 6J illustrate schematically the steps for manufacturing a photonic integrated circuit with at least one lithium niobate waveguide according to other possible embodiments of the invention.

### Examples of embodiments of the present invention

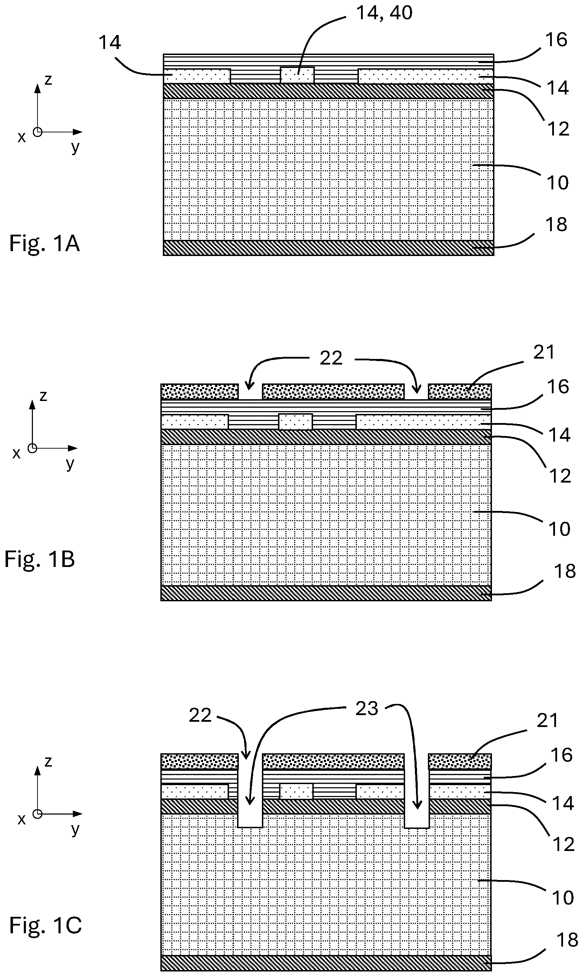

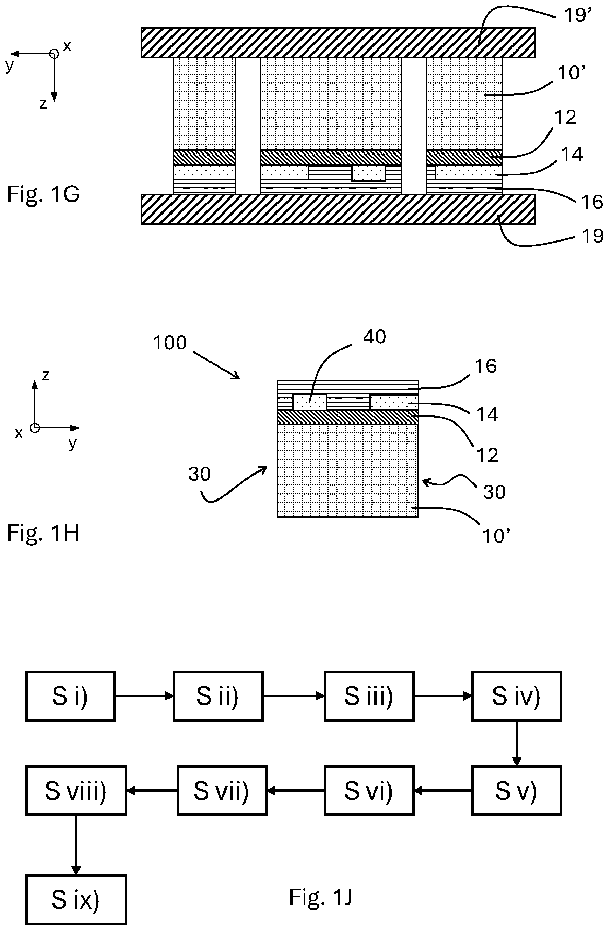

With reference to figures 1A to 1J, there are illustrated, in a simplified representation, steps for the manufacture a photonic integrated circuit with at least one lithium niobate waveguide according to a first embodiment of the invention. More precisely, figures 1A to 1H are sketches of a partial cross-sectional view of a stacking of layers for successive steps of manufacturing of a photonic integrated circuit, whereas Fig. 1J is a block diagram illustrating the order of said steps.

In all figures representing sectional views, the stacking is shown with a stacking direction or Z direction, extending between the bottom side and the top side of the page, which defines the thickness of layers or depth for excavated or hollow elements. Then, in the present text, a depth is defined in a parallel direction to the stacking direction or Z direction. Also, a Y direction, orthogonal to the stacking direction or Z direction, extends between the left side and the right side of the page, which defines the width of portions or elements along said Y direction. Finally, an X direction, orthogonal to the Z direction and to the Y direction, extends perpendicularly to the page of the drawings in figures 1A to 1H.

In relation with figure 1A, showing a step i), is provided an assembly of stacked layers comprising, in the stacking direction Z : a silicon (Si) substrate 10, a first silicon dioxide (SiO₂) layer 12 covering said silicon substrate 10, a lithium niobate (LiNbO₃) layer 14 on said first silicon dioxide (SiO₂) layer 12, and a dielectric layer 16 on said lithium niobate layer 14.
The first silicon dioxide layer 12 is sandwiched between the silicon substrate 10 and the lithium niobate layer 14, forming thereby a so-called BOX layer for "Buried Oxide".

The lithium niobate layer 14 is represented in the figure as a discontinuous layer to indicate that this layer may be patterned such as to define optical waveguides of lithium niobate. As a schematic example, the central lithium niobate segment 40 can be regarded as a section of an optical waveguide running parallel to the X direction, i.e. perpendicular to the plane of the page. Obviously, the lithium niobate layer 14 can also be patterned defining waveguides along any other direction in the X-Y plane.

On the top of the lithium niobate layer 14, the dielectric layer 16 which covers said lithium niobate layer 14 protects the waveguides 40 from mechanical or chemical damage. The dielectric layer 16, acts thus as a cladding layer.

In a possible embodiment, said cladding dielectric layer 16 also comprises silicon dioxide, which can be initially formed from tetraethylorthosilicate gas precursor (TEOS), used as a silica source. This process is executed at moderate temperatures (between 200 °C and 400°C) for instance by a plasma enhanced chemical vapor deposition (PECVD) as known by the skilled person.

In Figure 1A, another bottom or external silicon dioxide (SiO₂) layer 18 is further represented, which covers the silicon substrate 10 on the opposite face with respect to the side carrying the lithium niobate layer 14 and the cladding layer 16.

As an example of implementation of the assembly of stacked layers used as starting point of the manufacturing method and shown in figure 1A, one can use the following layers thicknesses.
- silicon substrate 10 : 675 µm, or more generally from 300 to 800 µm;
- first silicon dioxide (SiO₂) layer 12 : 4.7 µm or more generally from 1 to 6 µm;
- lithium niobate (LiNbO₃) layer 14: 600 nm, or more generally between 100 to 1000 nm;
- cladding dielectric layer 16 (SiO2) : 5.3 µm or more generally from 2 to 8 µm.

In the next step ii), which result is visible in Figure 1B, a first photoresist mask 21 is applied on the dielectric layer 16 and openings 22 are created in said first photoresist mask 21. The technique used to provide the openings can be the classical optical lithography with a mask and illumination of the photoresist mask 21. The openings 22 extend through the whole thickness of said first photoresist mask 21.

In the next step iii), which result is visible in Figure 1C, one implements etching through the openings 22, performing a first etching step by an anisotropic etching, notably by Reactive-ion etching (RIE). This first etching step, through said openings 22 creates cavities 23 across all the thickness of said cladding dielectric layer 16, said lithium niobate layer 14 and said first silicon dioxide layer 12. These cavities 23 extend in the stacking direction or Z direction of the openings 22.

The RIE process may comprise several sub-steps adapted to the nature of the different dielectric layers to be etched. For example, etching of the silicon dioxide layers can be performed using an etching gas mixture containing fluorine such as C₄F₈, CHF₃, CF₄, or any equivalent gas (CxFy, CxHyFz). The etching gas may further include Ar, O₂, He, N₂ and H₂ or a combination thereof. Excellent results have been achieved by the inventors using a mixture of CHF₃, SF₆ and O₂. The etching of the oxide layers can be performed at low pressure to favor a physical etching mechanism, for example in a range between 0.1 to 3 Pa (or approximately 1 to 22 mTorr), preferably at 0.4 Pa (or approximately 3 mTorr). The substrate can be placed on a chuck with Helium back-side cooling and kept at low temperature to avoid degradation of the photoresist mask. A typical range of temperatures is between -10°C and 10°C. This step may be implemented with a RF coil the power of which can be adjusted in a wide range varying from 200 W to 3000W depending on the equipment, and the RF bias power can be set in a range varying from 10W to 1500W. In an example, settings of 300W for the RF coil and 150W for the RF bias resulted in a SiO₂ etching speed of 250-300 nm/min.

The etching recipe can be advantageously changed to etch the lithium niobate layer. The change of recipe can be triggered by an end point detection system like Optical Emission Spectroscopy (OES), laser interferometry or any equivalent method. The lithium niobate is preferably etched using physical bombardment with Ar. Other gases like O₂, H₂, N₂ could be used as well. The pressure can be kept low, between 0.1 and 1.4 Pa (or approximately 1 to 10 mTorr). Some fluorine gases (e.g. C₄F₈, CHF₃, CF₄, or more generally CxFy, CxHyFz) may be added to the mixture. Excellent results have been achieved by the inventors using a mixture of Ar and CHF₃. In an example, setting the RF coil power at 300W and the RF bias at 120W leads to an etching speed of the lithium niobate layer between 30 and 50 nm/min.

Once the lithium niobate layer 14 has been etched through, the RIE recipe for silicon dioxide can be reused to attack to first silicon dioxide layer 12.

Optionally, as visible in figure 1C, these cavities 23 may also extend slightly into the silicon substrate 10, to ensure that the bottom of the cavity is clean from any dielectric residues. This first etching process (step iii) can be controlled for example by an interferometric measurement indicative of the thickness of the dielectric layers 12, 14 and 16. Such measurement allows clear identification of the moment when the Si substrate is reached through the forming cavities 23. The attack may then be continued for about one minute to ensure a complete removal of SiO₂ from the bottom, which typically results in the cavities 23 extending by some hundreds of nanometres into the silicon substrate 10.

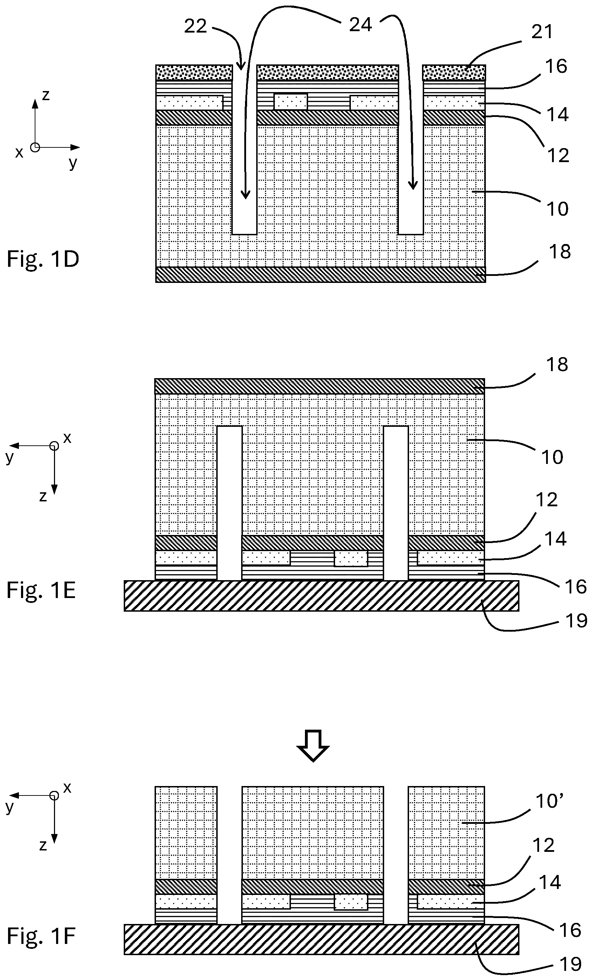

In the next step iv), which result is visible in Figure 1D, one implements a second etching step by Deep Reactive-ion etching (DRIE) through at least part of said openings 22, whereby at least part of said cavities 23 are extended deeper, down to a predetermined depth of at least 100 µm, into the silicon substrate 10, forming thereby deeper cavities 24.

In a preferred embodiment, the so-called Bosch process can be implemented, but other etching methods leading to deep anisotropic etching of the silicon may be used as well, for example, cryogenic processes. According to a preferred embodiment, the DRIE process involves alternating passivation and etching steps leading to anisotropic etching. The verticality, selectivity to the mask and etch speed are adjusted by optimizing the etching parameters. The suitable parameter range is broad and is equipment dependent. Each etching cycle consists in deposition, pre-etching and etching steps, and lasts typically 3 to 10 seconds. The passivation cycle can be performed using C₄F₈ gas and the etching cycles with SF₆. The source power can be adjusted between 2000W and 3000W and the platen power between 0W and 100W. The process pressure is typically set at 40 mTorr (approx. 5.33 Pa) for the deposition cycle and between 30 to 50 mTorr (between approx. 4 and 6.67 Pa) for the etching. As for the RIE process, in this step the substrate temperature is preferably controlled using a clamping system with Helium back-side cooling. The substrate temperature is typically kept between -10 and 20°C. Typical etching speeds obtained through this process are between 5 and 10 µm/min.

In the example of Fig. 1D, this second etching process (step iv) is applied across all the represented openings 22, and all cavities 23 are extended to said predetermined depth to define deeper cavities 24. This is not necessarily always the case as will be later discussed in further examples.

In some embodiments, the deeper cavities 24 may advantageously extend along the Z direction of the stacking down through at least one-third (1/3) of the thickness of the silicon substrate 10, or at least half (1/2) of the thickness of the silicon substrate 10. This is advantageous for example when said cavities are used to define the contours of the PIC for singulation through additional optional steps as will be explained in the following paragraphs with reference to Figs. 1E to 1H.

Continuing with a sequence of optional steps, the chips can be separated from the fabrication platform as explained in the following. In a step v), the first photoresist mask 21 is removed. A cleaning step with oxygen plasma and wet cleaning can be preferably implemented on the free surface of the cladding layer 16. Afterwards, in a step vi), a first adhesive tape 19 is applied to the cladding layer 16 as shown in Figure 1E, where the stacking has been represented upside-down. The first adhesive tape 19 serves both as protection and support for the LNOI stacking as will be explained later. It also covers and closes the aperture of the cavities 24 on the side of the free surface of the cladding layer 16 (at the bottom of figure 1E). Advantageously, the adhesive tape 19 should be easy to remove and leave no tenacious traces of adhesive on the cladding layer, for example a UV tape as commonly used in microfabrication and cleanroom processes can be used.

Next, as can be seen in Figure 1F, the external silicon dioxide (SiO2) layer 18 is removed and the thickness of the silicon substrate 10 is reduced on its side which is opposite to the cladding and lithium niobate layers, forming a thinned-down silicon substrate 10'. This resurfacing operation can be implemented as a step vii) comprising a grinding process. The Si substrate 10 is advantageously reduced until the cavities 24 are opened at their bottom side, i.e. through the free surface of said thinned-down silicon substrate 10'.

In the next step viii) visible in Figure 1G, a second adhesive tape 19' is applied to the free surface of the thinned-down silicon substrate 10'. This second tape 19' also covers and closes the aperture of the cavities 24 on the side of the free surface of the thinned-down silicon substrate 10' (at the top of figure 1G). This second UV tape 19' serves as a temporary support for the thinned-down silicon substrate 10', and the portion of the stacking forming a chip or device 100 containing at least a lithium niobate waveguide 40.

Next, in a final step ix) one of the adhesive tapes 19, 19' is removed, and a free-standing PIC device 100 is finally separated from the other adhesive tape 19', 19 and therefore from the full stacking, as represented in Fig. 1H.

In this context, one understands that the deeper cavities 24 which are only partially visible on figures 1D to 1G, may extend in the X and Y directions in the shape of trenches, to form a continuous and closed loop, enabling a later separation of the device 100, as illustrated in figure 1H. This device 100 is delimited in the X and Y directions by such a closed loop (not shown) formed by the deeper cavities 24.

The resulting device 100 shown in Figure 1H has lateral faces 30 parallel to the stacking direction (Z) resulting from lateral walls of the deeper cavities 24. This means that the surface quality of the lateral faces 30 of the device 100 is the same as the surface quality of the trenches defined by the deeper cavities 24, obtained by the second etching step of Deep Reactive-ion etching (DRIE).

Advantageously, the high spatial precision of these microfabrication processes, allows defining the contours of the cavities such that the lateral faces 30 of the separated PICs 100 define guiding mechanical structures to connect with other photonic components.

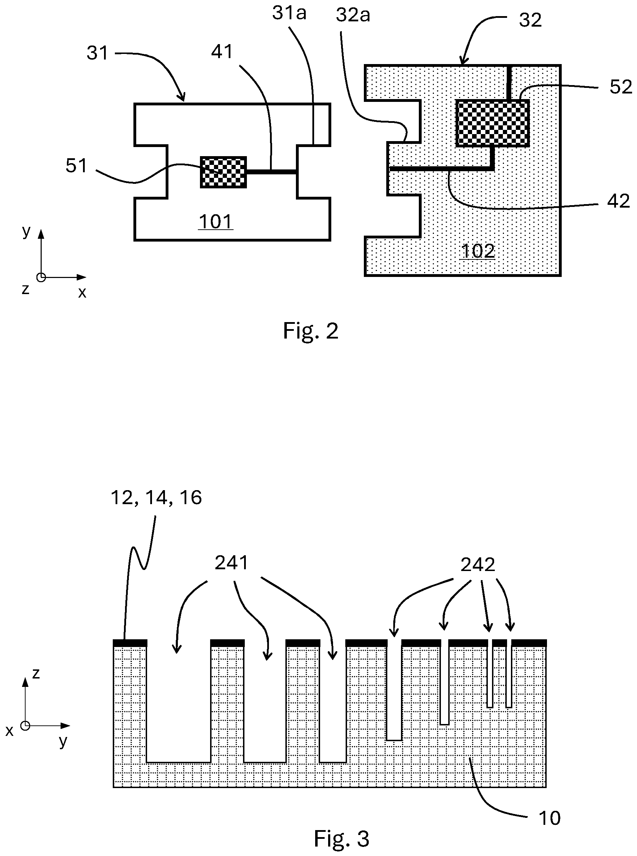

Figure 2 shows schematically two PICs 101, 102, as seen from the top (the stacking direction Z is perpendicular to the page in this view). The two PICs 101, 102 can be fabricated through the process described above and have matching contours 31, 32, which are configured to guide the mechanical connection between them. Each of the PICs has at least one lithium niobate waveguide 41, 42, which can optically connect, with minimum losses, with a matching lithium niobate waveguide of the other PIC when the two PICs 101, 102 are assembled. This application highlights the need for smooth and clean lateral faces of the PICs, which can be obtained by the present method without additional polishing steps.

Further generic elements 51, 52 of the PICs are also depicted in Fig. 2, representing possible functional elements such as electro-optic modulators, light emitting elements, etc. Although in this example both PICs 101, 102 are said to be fabricated by the present methods, it is also possible to adapt the contours of only one chip for matching and guiding the connection to a part fabricated by other means, such as an optical fiber.

Another possibility enabled by the method, not shown in the figures, is to create through holes across the PIC, which could enable further mechanical connections or provide access for detectors or electrodes to interact with the lithium niobate waveguides. A through hole can be directly defined as a single large cavity of the process or be defined by a trench in the form of an internal closed loop.

In the examples discussed until now, all the deep cavities 24 have been opened down to the same predetermined depth. This results naturally from the DRIE process as long as all cavities are larger than a minimum width. Said minimum width depends on the targeted predetermined depth.

Figure 3 shows schematically the result of the DRIE process for cavities in the form of trenches of different widths. For simplicity, in this representation, the cladding dielectric layer 16, the lithium niobate layer 14 and the first silicon dioxide layer 12 are represented as a single collapsed element on top of the silicon substrate 10. The three trenches 241 on the left side of the figure present different widths but are all sufficiently large to attain a same predetermined depth. These trenches which in the process attain the predetermined depth irrespective of their width are identified as belonging to a first group (Type I).

The four trenches 242 on the right side of Fig. 3 have in contrast variable depths, which depend on their respective widths. We identify such trenches as belonging to a second group (Type II). The dependency of the maximum depth of a trench with its width is determined by the DRIE process which, as a rule of thumb allows excavating trenches up to an aspect ratio of 20/1, meaning that the maximum attainable depth is approximately 20 times the width of the trench. With a targeted predetermined depth of 200 µm, any trench having a width equal or larger than (200 µm / 20 ) = 10 µm could in principle reach the predetermined depth, as is the case of the cavities 241 of Fig. 3 (Type I). Trenches having a width smaller than 10 µm would on the other hand not reach the targeted predetermined depth of 200 µm due to the aspect ratio limitations of the DRIE process. These trenches will have a width-dependent shorter depth, as the example trenches 242 of Fig. 3 (Type II). It will be noted that the critical width separating the trenches of the first and second types is not an absolute value applicable to just any process, but a limit that depends on the targeted depth which has been predetermined for the process.

Fabricating through a unique process cavities and trenches of different depths can be advantageously implemented in the fabrication of PICs. Trenches of the first type can be used for example to define the contours of the PIC, or an inner through hole. Trenches of the second type can be advantageously used to at least partially isolate certain elements on the PIC stacking without breaking them apart.

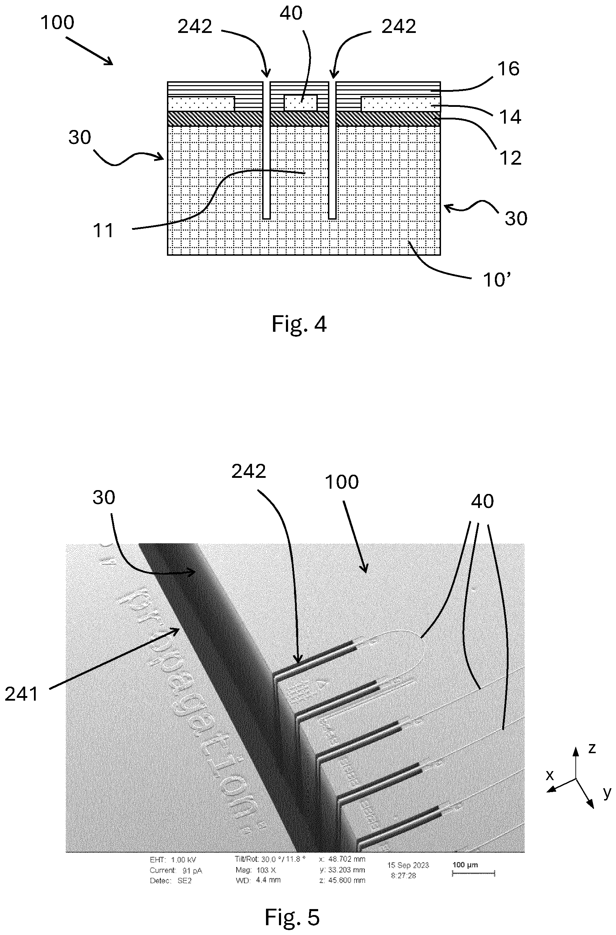

Figure 4 shows an example of this possibility. A PIC device 100 already separated from the fabrication platform is represented. The lateral walls 30 of the PIC 100 were created from trenches of the first type, which are no longer visible, since the PIC has been separated. Said trenches defined a closed contour around the PIC 100 and presented a predetermined nominal depth which enabled grinding apart the device 100 through the process described above with reference to Figs. 1A to 1H.

The PIC of Fig. 4 is further provided with trenches 242 of the second type which, due to their limited width, did not reach the targeted depth during the DRIE process. As such, the bottom of the Type-II trenches 242 was not opened through the grinding process. The resulting blind trenches 242 advantageously define a ridge 11 in the substrate on top of which a lithium niobate waveguide 40 is provided. The blind trenches 242 may advantageously run parallel to at least one portion of the waveguide 40 creating a discontinuity in the cladding layer 16, partially isolating the lithium niobate waveguide 40 from the surrounding materials, which contributes to the confinement of the optical mode transmitted in the waveguide.

An additional advantage of providing trenches 242 of the second type is that, by creating a discontinuity in the substrate 10', they can thermally isolate the corresponding elements on different sides of the trenches. Said discontinuity can also advantageously confine the electric field applied in the vicinity of a waveguide 40 and reduce possible cross talk of the electric modulation of several lithium niobate waveguides closely arranged on a PIC, thus enabling a higher density of channels in a single device.

For example, the ridge 11 in figure 4 may present a width between 2 and 20 µm, preferably between 2 and 10 µm when its main function is to improve the optical mode confinement along the waveguide. On the other hand, the ridge could be larger, for example up to 200 µm to suit other applications. For example, the ridge could support not only a waveguide 40 but also some electronic components (not represented), including heating elements to allow adjusting the temperature of the waveguide or other elements. The ridge could be larger in this case, but the limiting trenches 242 would still provide an effective thermal isolation for said heating elements and other components.

Typical width of trenches of the second type can be for example between 2 and 20 µm. On the other hand, for isolating a ridge in the PIC 100, larger trenches of the first type could also be provided if needed. Such larger trenches of the first type could be open at the bottom. This would weaken the mechanical structure of the ridge, but it would on the other hand provide a better thermal isolation for the subsystem of the PIC supported by the ridge.

Figure 5 shows a scanning electron microscope (SEM) image of a PIC 100 having several lithium niobate waveguides 40 closely spaced and distributed along the Y axis. Each waveguide 40 is open to a side wall 30 of a large trench 241 of the first type and surrounded at its extremity by a pair of blind trenches 242 running parallel to the waveguide axis. In this example, the trenches 242 only follow the waveguides along the first 250 µm of their length starting from the open face. It is of course possible to produce shorter or longer blind trenches 242 which may follow the waveguide along a segment of any length. It may appear in the image that the narrow trenches 242 extend all the way down to the same depth as the large trench 241. This is the case along the plane of the sidewall 30 because this plane is exposed to the DRIE etching from the large trench 241 side. However, when going a few micrometers from the side wall 30 into the narrow trenches 242, it appears that the bottom steps up at a lesser depth than that of the large trench 241. When this chip is later processed with the grinding step, the large trench 241 will be opened on its bottom side to allow separating the PIC 100, however, the narrow trenches 242 will remain closed, at their bottom side, providing the necessary mechanical solidity to the ridge structures supporting the isolated waveguides 40.

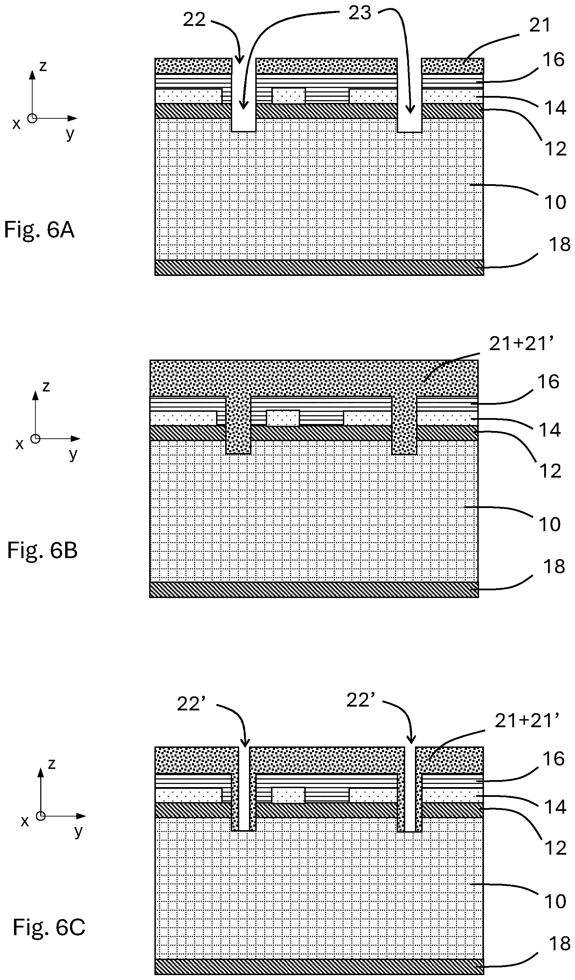

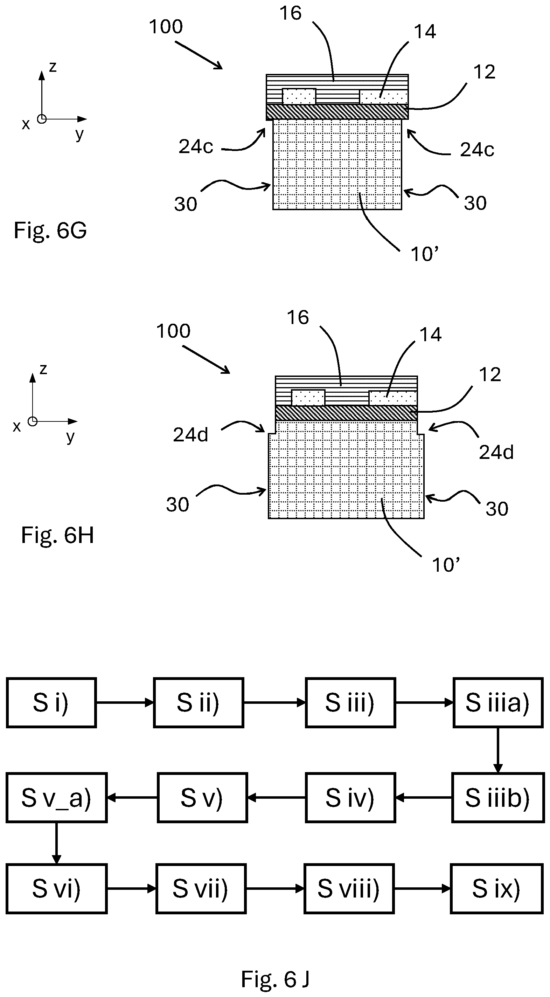

The first example of manufacturing method illustrated in Figures 1A to 1J relates to a one mask solution, where the first and second etching steps are implemented through the same first photoresist mask 21. Figures 6A to 6J will now be described for a second example of manufacturing method. More precisely, figures 6A to 6G are sketches of a partial cross-sectional view of a stacking of layers for several steps of manufacturing. Figure 6H is a resulting cross-sectional view according to one alternative, and Fig. 6J is a block diagram illustrating the order of the steps according to the described embodiment. This second manufacturing method uses two different photoresist masks 21 and 21'.

The first steps i) to iii) of the method described before with reference to the figures 1A, 1B and 1C are performed identically for this second method. The Fig. 6A also identically corresponds to Fig. 1C, where the cavities 23 have been formed by RIE through the openings 22 of the first photoresist mask 21.

From this point on, the second method is different in that a further step iiia) is executed before step iv), with said step iiia) comprising applying a second photoresist mask 21' on said first photoresist mask 21, whereby said second photoresist mask 21' fills the cavities 23, as visible in Fig. 6B.

Then, in a second intermediary step iiib), executed after the step iiia) and before step iv), a new photolithography process is applied with another mask (not shown) creating new openings 22' which are aligned with but smaller in width (X and Y directions) than the openings 22 (and cavities 23) previously made in the first photoresist mask 21. At this point, as illustrated in Fig. 6C, the second photoresist mask 21' covers the lateral walls of the cavities 23, but defines new accesses to the bottom of said cavities 23, through new openings 22'. In other words, the bottom of said cavities 23 is exempt from secondary photoresist mask 21' as visible in Fig. 6C. Said bottom is located in the silicon substrate 10. The access openings 22' extend through the complete thickness of the photoresist mask 21, 21', the dielectric layer 16, the lithium niobate layer 14 and the first silicon dioxide layer 12.

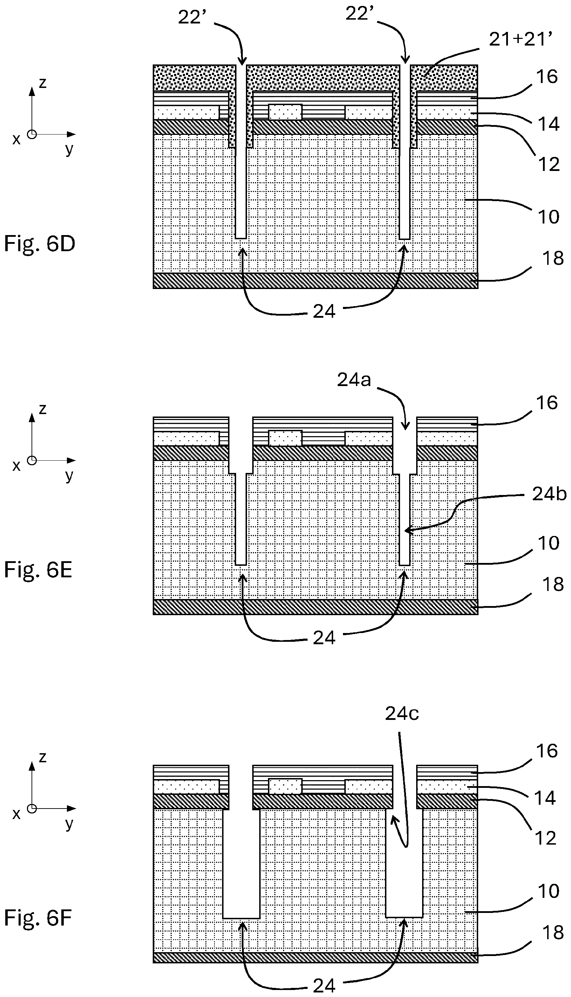

Afterwards, a step iv) equivalent to the previously described method is implemented. The result is shown in figure 6D. Step iv) comprises a second etching step by Deep Reactive-ion etching (DRIE) whereby at least part of said cavities 23 are extended into the silicon substrate 10 by at least 100 µm, forming thereby deeper cavities or trenches 24. In this context, thanks to the presence of the second photoresist mask 21' covering the lateral wall of said cavities 23, there is no surface degradation or enlargement of the width (X and Y directions) of said cavities 23 in the dielectric layers 12, 14 and 16. The trenches 24 are divided in the stacking direction into a first portion 24a corresponding to the original cavities 23, and a second portion 24b with a smaller width (X and Y directions) than the first portion 24a and extending only in the silicon substrate 10.

Afterwards, a cleaning step v) equivalent to the previously described method is implemented, wherein all the first and second photoresist masks 21, 21' are removed. The result is shown in figure 6E.

In a subsequent optional step v_a), which results in the section visible in Figure 6F, there is a further (third) etching step to form an overhang 24c or balcony at the interface between the first silicon dioxide layer 12 and the silicon substrate 10. This overhang 24c results from the enlargement of the portion of the cavities 24 defined in the silicon substrate 10. This optional step v_a) comprises an isotropic etching step whereby the cavities 24 are enlarged as the silicon substrate is attacked. For example an isotropic plasma etching with SF₆ or XeF₂ and/or a wet etching, using for example KOH or Tetramethylammonium hydroxide (TMAH) can be implemented for this step.

The process can be completed by the PIC separation steps vi) to ix) equivalent to the previously described method. The result is visible in Fig. 6G, which shows a PIC 100 already separated from the fabrication platform. According to the described method, the dielectric layers 12, 14 and 16 of the PIC 100 protrude in the X-Y plane beyond the lateral walls 30 of the substrate 10'. This can be advantageous for example to guarantee an intimate contact of a protruding face of the lithium niobate waveguide with an external connecting element, such as an optical fibre. Indeed, if the connecting face of the lithium niobate waveguide was coplanar with a lateral wall of the substrate (in general a much greater surface), there would be risk that any rugosity or residue left in said substrate wall could prevent the intimate contact of the lithium niobate waveguide with the connecting element. An overhang 24c with a typical length between 1 and 5 µm, advantageously reduces this risk.

On the other hand, as mentioned before, the step v_a) is optional and can be omitted where no overhang 24c is required. Actually, by omitting the step v_a), it is possible to obtain a PIC as represented in Fig. 6H, where the dielectric layers 12, 14 and 16 are withdrawn in the X-Y plane with respect to the substrate 10'. Indeed, the lateral faces of the cladding dielectric layer 16, the lithium niobate layer 14 and the first silicon dioxide layer 12 are aligned, defining a recess 24d with respect to the lateral walls 30 of the silicon substrate 10'. This can be advantageous on walls where no intimate optical connection is needed with the waveguides, and where the silicon substrate 10' is configured to provide a mechanical interface. A recess 24d of the dielectric layers, with a typical length between 1 and 10 µm would in this case advantageously protect them from mechanical damage at such connecting interface.

In yet another variation of this second method, the isotropic etching step v_a) of the method can be adjusted to bring the lateral wall of the silicon substrate in alignment with the lateral walls of the dielectric layers. In this case the resulting PIC would be similar to the result of the first method (figures 1A to 1J), in that the cut plane is aligned across all layers. However, this second method would still have the advantage of protecting the lateral faces of the dielectric layers 12, 14, 16 during the DRIE step for better final verticality and surface quality of said faces.

### Figure References

- 10: Silicon substrate
- 10': Silicon substrate with reduced thickness after grinding
- 11: ridge
- 12: first silicon dioxide (SiO₂) layer
- 14: Lithium niobate (LiNbO₃) layer
- 16: Cladding dielectric layer
- 18: External silicon dioxide (SiO2) layer
- 19: First adhesive tape
- 19': Second adhesive tape
- 21: First photoresist mask
- 21': Second photoresist mask
- 22: Opening
- 22': New opening
- 23: Cavity
- 24: Deeper cavity
- 24a: First portion of deeper cavity
- 24b: Second portion of deeper cavity
- 24c: Overhang
- 24d: Recess
- 30: Lateral wall
- 40, 41, 42: Lithium niobate (LiNbO₃) waveguides
- 51, 52: Generic components
- 100, 101, 102: Photonic Integrated Circuit (PIC)
- 241: Trench of a first type
- 242: Trench of a second type

## Claims

1. Method of manufacturing a photonic integrated circuit (100) with at least one lithium niobate waveguide (40) comprising the following steps :
i) providing a lithium niobate-on-insulator (LNOI) stacking, said stacking comprising a silicon (Si) substrate (10), a first silicon dioxide (SiO₂) layer (12) on said silicon substrate (10), a lithium niobate (LiNbO₃) layer (14) on said first silicon dioxide layer (12), and a cladding dielectric layer (16) on said lithium niobate layer (14),
wherein said lithium niobate layer (14) comprises said lithium niobate waveguide (40),
ii) applying a first photoresist mask (21) on said cladding dielectric layer (16) and creating at least one opening (22) in said first photoresist mask (21) by a photolithography process,
iii) implementing a first etching step by Reactive-ion etching (RIE) through said at least one opening (22), thereby creating at least one cavity (23) across all the thickness of said cladding dielectric layer (16), said lithium niobate layer (14) and said first silicon dioxide layer (12),
iv) implementing a second etching step by Deep Reactive-ion etching (DRIE) through at least part of said at least one opening (22), whereby at least part of said at least one cavity (23) is extended further through the silicon substrate (10) along a predetermined depth of at least 100 micrometres, forming thereby at least one deeper cavity (24).

2. Method according to claim 1, wherein said at least one deeper cavity (24) extends through a predetermined depth corresponding to at least one third, preferably at least half of the silicon substrate (10) thickness.

3. Method according to any of the preceding claims, wherein said at least one deeper cavity (24) comprises a trench in the form of a closed loop which defines a contour of the photonic integrated circuit (100).

4. Method according to claim 3, further comprising the following step:
vii) grinding the bottom side of the silicon substrate (10), which is opposite to the side where the first silicon dioxide layer (12), the lithium niobate layer (14) and the cladding layer (16) are provided, until the thickness of said silicon substrate (10) is reduced down, to reach a value which is equal to or smaller than said predetermined depth, so as to open the bottom of at least said trench in the form of a closed loop, thereby disconnecting said photonic integrated circuit (100) from said lithium niobate-on-insulator (LNOI) stacking.

5. Method according to any of the preceding claims, further comprising the following steps to be executed after the first etching step iii) and before the second etching step iv):
iiia) applying a second photoresist mask (21') on said first photoresist mask (21), whereby said second photoresist mask (21') fills said cavities (23), and
iiib) creating at least one new opening (22') through said first and second photoresist masks (21, 21'), which is aligned with but smaller in width than a corresponding opening (22) among said openings (22) previously made in the first photoresist mask (21).

6. Method according to any of the preceding claims, further comprising the following steps to be executed after the second etching step iv), and before a possible step vii) of grinding the bottom side of the silicon substrate (10):
v) removing all photoresist masks (21, 21') and
v_a) applying a third etching step, comprising an isotropic etching process.

7. Method according to any of the preceding claims, comprising creating at least one cavity (23) which is narrow enough to prevent the corresponding deeper cavity (24) from reaching said predetermined depth during the execution of said second etching step, thereby creating a deeper cavity of a second type (242) **characterized by** a depth which is lower than said predetermined depth and which is dependent on the width of the cavity (23).

8. Method according to claim 7 wherein said deeper cavity of a second type (242) presents a width which is equal or smaller than one twentieth (1/20) of said predetermined depth.

9. Method according to any of the previous claims, wherein said at least one cavity (23) realized through said first etching step, also extends into the silicon.

10. Photonic integrated circuit (100) fabricated by a method according to any of the claims 1 to 9.

11. Photonic integrated circuit (100) according to claim 10, wherein said at least one deeper cavity (24) has the form of a trench running along one side of at least one portion of a lithium niobate waveguide (40) of said photonic integrated circuit (100).

12. Photonic integrated circuit (100) according to claim 11, further comprising another deeper cavity (24) in the form of a trench running along the opposite side of said at least one portion of said lithium niobate waveguide (40), such that said portion is partially isolated from the surrounding materials by laying on a ridge (11) of the silicon substrate (10) defined by said trenches.

13. Photonic integrated circuit (100) according to claim 12, wherein the width of said ridge (11) is between 2 and 200 micrometres.

14. Photonic integrated circuit (100) according to any of the claims 11 to 13, wherein said at least one deeper cavity(24) having the form of a trench is a deeper cavity of the second type (242) fabricated by a method according to any of the claims 7 or 8 and having a width between 2 and 20 micrometres.

15. Photonic integrated circuit (100) according to any of claims 10 to 14, wherein it is fabricated by a method including step vii) of claim 4, and wherein it is built such that it has a contour configured to define a mechanical guide for connecting the photonic integrated circuit (100) to another device.

16. Photonic integrated circuit (100) according to any of claims 10 to 15, wherein it is fabricated by a method according to claims 4 and 5, and wherein the lateral faces of said cladding dielectric layer (16), said lithium niobate layer (14) and said a first silicon dioxide layer (12) are aligned and define a recess (24d) with respect to the lateral walls (30) of the silicon substrate (10').

17. Photonic integrated circuit (100) according to any of claims 10 to 15, wherein it is fabricated by a method according to claim 6, and wherein the lateral faces of said cladding dielectric layer (16), said lithium niobate layer (14) and said a first silicon dioxide layer (12) are aligned and define a protrusion (24c) with respect to the lateral walls (30) of the silicon substrate (10').
